# EUROPEAN PATENT SPECIFICATION

(11) **EP 2 958 217 B1**
(45) Date of publication and mention of the grant of the patent: **31.01.2018**
(21) Application number: 14172956.6
(22) Date of filing: 18.06.2014
(51) Int. Cl.: H02K 3/24, H02K 9/02, H02K 9/04, H02K 1/20, H02K 7/18, F03D 9/00

(54) **Generator cooling arrangement**
Generatorkühlanordnung
Agencement de refroidissement du générateur

(43) Date of publication of application: 23.12.2015
(73) Proprietor: Siemens Aktiengesellschaft, 80333 München (DE)
(72) Inventor: Airoldi, Giovanni, 7330 Brande (DK); Thomas, Arwyn, Cheshire, SK8 6HW (GB)

(56) References cited:
- CN-U- 201 846 161
- US-A1- 2002 053 838
- US-A1- 2012 091 722
- US-A1- 2014 091 651

## Description

The invention describes a cooling arrangement realised to cool stator windings of a generator; a wind turbine with such a cooling arrangement; a wind turbine; and a method of cooling the stator windings of a generator.

During operation of a generator such as a wind turbine generator, high levels of electrical current are induced in the windings, and these become very hot as a result. A high temperature in the windings is undesirable for a number of reasons. The resistance of the windings increases at higher temperatures, with a detrimental effect on the generator's output power. Also, the heat from the generator is passed to the magnets and can have an adverse effect on their performance. Other components in the generator, such as electrical circuitry for auxiliaries, can also be affected by the high temperatures. Therefore, much effort is invested in attempting to cool the generator.

In the known generator designs in which an inner or outer stator is the armature, the stator is loaded with a plurality of windings or coils, and a corresponding rotor is loaded with magnets or magnet pole pieces. About the stator, each winding is arranged in a slot formed between adjacent stator teeth. To cool the windings, a cooling airflow can be directed into the air-gap between rotor and stator, so that some heat can be transported away by the cooling airflow. Heat dissipation elements such as cooling fins may be mounted onto an exterior surface, for example onto the outer surface of an outer rotor, in an effort to transfer heat away from the hot magnets that have in turn been heated by the windings across the air-gap. Other cooling techniques involve a cooling airflow into the interior of an inner stator in an attempt to draw heat away from the stator supporting structure. However, these approaches are all limited to some extent by the stator design. For example, in most designs it is not possible to access the hot windings directly since each winding is closely packed between adjacent stator teeth. In other designs it is not possible to access the windings as well as the supporting structure. Therefore, the effectiveness of the known designs is limited by the inability to draw heat away from the windings as well as the supporting structure.

Document CN201846161U discloses a generator which is cooled using coolant conveying axial winding channels and coolant conveying channels that extend axially in an interior cavity of the stator.

It is therefore an object of the invention to provide an improved way of removing the heat generated in the windings of a stator.

This object is achieved by the cooling arrangement of claim 1; by the wind turbine of claim 9; and by the method of claim 13 of cooling the stator windings of a generator.

According to the invention, the cooling arrangement is realised to cool stator windings of a generator, and comprises an airflow guiding means for guiding a cooling airflow into a plurality of axial winding channels - wherein an axial winding channel extends along a gap between adjacent stator windings in a direction essentially parallel to an axis of rotation of the generator - and subsequently into an interior cavity of the stator.

In the following, but without restricting the invention in any way, it may be assumed that the stator is an inner stator acting as the armature, on which the windings are arranged between stator teeth mounted on an essentially cylindrical supporting structure. The invention makes good use of a stator design in which there is a free space between each pair of windings, i.e. in which a pair of windings is arranged between stator teeth, and the windings of that pair are separated only by an airspace or gap. Unlike known stator designs in which a single coil or winding is held closely in a slot between adjacent stator teeth, this design arranges the windings pair-wise in a single slot. In other words, two windings are placed in a slot formed by adjacent stator teeth, and a separated by a gap so that the two windings do not touch each other.

An advantage of the cooling arrangement according to the invention is that the cooling airflow can be directed specifically along the stator windings, which are the main source of the heat in the generator, as described above. The invention makes use of the fact that windings are arranged pair-wise with a gap in between. The cooling arrangement specifically directs the cooling airflow through this gap and subsequently into the stator interior, so that heat from the windings as well as from the stator supporting structure can very effectively be given off to the cooling airflow and transported out of the stator. In this way, a very effective generator cooling can be achieved with relatively little effort.

According to the invention, the wind turbine comprises a direct-drive generator with an outer rotor and an inner stator; and a cooling arrangement according to the invention for cooling the stator windings.

An advantage of the wind turbine according to the invention is that the generator can be very effectively cooled as described above. Furthermore, the efficient cooling of the stator windings ensures that the rotor magnets are protected from over-heating. This can significantly increase the wind turbine's output and can also reduce maintenance costs that might otherwise arise from heat damage to the magnet poles. The generator comprises an outer rotor and an inner stator, which stator comprises an arrangement of stator teeth about an annular supporting structure and a plurality of windings arranged pair-wise between adjacent stator teeth, with an axial channel between the windings of each pair, and wherein the stator is realised for connection to the cooling arrangement according to the invention.

An advantage is that the windings of the stator can be very effectively cooled when connected to the cooling arrangement according to the invention, as described above. Since the cooling airflow can then be directed along the axial channels between the windings, the cooling airflow is directly conveyed along the windings to reach the hottest part of the generator. Another advantage is that only relatively little adaptation might be required in order for the generator to be connected to the cooling arrangement according to the invention.

According to the invention, the method of cooling the stator windings of a generator comprises the steps of providing a plurality of axial winding channels such that an axial winding channel extends along a gap between adjacent stator windings in a direction essentially parallel to an axis of rotation of the generator; guiding a cooling airflow along the plurality of axial winding channels and subsequently into an interior cavity of the stator.

An advantage of the method according to the invention is that the cooling air can be directed in a favourably straightforward manner into the hottest region of the generator, namely the region in the direct vicinity of the windings. Heat from the windings as well as from the stator supporting structure can therefore be transported away from this region in an effective and simple manner.

Particularly advantageous embodiments and features of the invention are given by the dependent claims, as revealed in the following description. Features of different claim categories may be combined as appropriate to give further embodiments not described herein.

In the following, but without restricting the invention in any way, it may be assumed that the stator comprises segmented lamination teeth mounted on or otherwise supported by an inner structure, generally referred to as a "stator yoke". The inner structure can comprise a cylindrical drum, for example a steel drum. The stator teeth can be manufactured separately and may be shaped to hook or otherwise connect to each other and/or to the supporting structure. A slot formed by adjacent stator teeth may be assumed to be large enough to accommodate at least two windings such that a gap of at least 3.0 mm is left between the adjacent windings. A "winding" or "coil" in the context of the present invention can comprise any suitable number of conductors, preferably arranged in a rectangular array or stack.

In the following, without restricting the invention in any way, it may be assumed that the stator has a front end, usually referred to as the drive end, since the generator is connected at that end to the rotor hub which acts to turn the rotor. It may also be assumed that the rear end of the stator is the non-drive end, which usually faces into the nacelle or canopy of the wind turbine.

The capacity of the cooling airflow to absorb heat from the surfaces over which it passes will depend to some extent on the speed at which the airflow is moving. Therefore, in a particularly preferred embodiment of the invention, the cooling arrangement comprises at least one fan for assisting inflow and/or outflow of the cooling airflow. For example, a fan or "blower" can be positioned in an air intake duct of the inflow guiding means and can be controlled to "push" air into the stator. Alternatively or in addition, a fan can be positioned in an exhaust duct of the outflow guiding means and can controlled to "suck" air out of the axial winding channels and the stator interior cavity, so that cooler air is automatically drawn into the axial winding channels to replace the warmed air that is actively being drawn out. Such an exhaust duct can be mounted with an outside opening at some convenient part of the nacelle, for example. By drawing the heated air into an exhaust duct and then expelling it out of the nacelle, it is ensured that the hot air is effectively removed from the interior of the nacelle and generator.

In a further embodiment, the stator interior cavity can be effectively sealed off from the outside, and the cooling airflow can instead be circulated within the stator. In such an embodiment, the heated air can be cooled using an arrangement of heat exchangers inside the stator interior cavity, and a number of fans can be used to draw the heated air over the heat exchangers and to direct the cooled air back into the axial winding channels, from where it can pass in some suitable manner back into the stator interior cavity.

In the preferred embodiments described above, the cooling airflow can deliberately and actively be drawn through the axial winding channels and to some extent over a hot surface of the stator yoke, so that heat from the windings and yoke can very effectively be transferred to the cooling airflow.

Air drawn from the exterior to cool the stator may introduce undesirable airborne impurities such as moisture, dust, etc. into the interior of the wind turbine, which may lead to damage to sensitive generator components. Therefore, a preferred embodiment of the wind turbine according to the invention comprises a mist eliminator and/or a filtration arrangement arranged at an entrance to an air intake duct. The mist eliminator can effectively remove moisture from the air intake, so that the air is dried before it reaches the stator. The filtration arrangement can effectively remove impurities such as salt particles, pollen, dust etc. from the air intake. A suitable realisation of such a mist eliminator and/or a filtration arrangement can favourably reduce maintenance requirements for the wind turbine.

The cooling arrangement can be realised to direct the cooling airflow into an axial winding channel at essentially any point along the winding channel. However, in a particularly preferred embodiment of the invention, the cooling arrangement is realised to direct the cooling airflow along essentially the entire length of an axial winding channel. To this end, the cooling airflow can enter an axial winding channel at one end (for example the drive end) and can travel along the axial winding channel to exit at the other end (for example the non-drive end). However, in such a realisation, the cooling airflow is coolest at its point of entry and warmest at its point of exit. Therefore, the result may be an unbalanced cooling of the windings, which may then exhibit an unfavourable temperature difference between the drive end and the non-drive end of the stator. Therefore, in a preferred embodiment of the invention, an axial winding channel comprises a number of outflow openings into an interior cavity of the stator, so that cooling airflow can be conveyed into the axial winding channel at both ends. The cooling airflow therefore passes from each end of the axial winding channel until it reaches an outflow opening, at which point it exits the axial winding channel. This arrangement allows for a more favourably balanced cooling of the windings.

Since the windings are in close contact to the stator teeth and to the supporting structure, heat is also transferred into the inner surface of the supporting structure. Therefore, in a further preferred embodiment of the invention, the cooling arrangement is realised to direct a cooling airflow also along the inner surface of the stator supporting structure. In a preferred embodiment, the cooling arrangement includes a plurality of axial fin channels through which the cooling airflow is conveyed, wherein an axial fin channel extends along a gap between adjacent cooling fins arranged on an inner surface of the stator in a direction essentially parallel to the axis of rotation of the generator. The cooling fins can be placed in an arrangement of parallel fins running the length of the stator and extending radially inward into the stator interior. The spaces between the fins act to contain the cooling airflow at a level close to the hot inner surface of the stator.

In a further preferred embodiment of the invention, the cooling airflow over the inner surface of the stator can be further improved by an inner shroud or "lining" that is arranged in the interior cavity of the stator such that it confines the cooling airflow to a space close to the inner surface of the stator. Preferably, such an inner shroud or lining has a number of openings into the interior of the stator so that the heated air can exit this space and escape into the larger interior stator space.

The "drive end" of the generator generally refers to the region that is encased in a front cover which rotates with the rotor and encloses a bearing between the rotating front cover and the stationary shaft about which the stator is mounted. For various design reasons, a relatively large "drive end cavity" ensues at the front of the generator. Both the rotor and the stator therefore can be regarded as having a "drive-end" and a "non-drive-end". The cooling airflow originates at the non-drive end of the generator, for example by drawing in air from the outside of the nacelle through a suitable duct arrangement. The warmed air is removed from the stator also at the non-drive end of the generator. Therefore, in a preferred embodiment of the invention, the cooling airflow is guided or brought to the drive-end of the stator so that it can flow through the pre-ordained spaces or channels to extract heat from the stator before being drawn out and expelled from the nacelle. To this end, in a preferred embodiment of the invention, the cooling arrangement comprises a drive-end cover for covering a drive end of the stator to direct the cooling airflow from the stator interior into an axial winding path and/or along an axial fin channel. Here, the expression "covering a drive end of the stator" is to be understood to mean that the drive-end cover acts to contain the cooling airflow along its path from the stator interior to an axial winding path or fin channel and acts to prevent the cooling airflow from being dispersed in the drive end cavity. In this way, the cooling airflow retains much of its effectiveness and is not "diluted" unnecessarily by any warmer air that may be present in the drive end cavity.

The cooling airflow can be introduced or guided into the stator interior cavity, from which it may find its way to the drive end of the stator. Alternatively, in a preferred embodiment of the invention, the stator comprises a number of axial stator ducts arranged in the stator interior for conveying the cooling airflow to the drive end of the stator. The cooling airflow can be conveyed from an air intake channel (that extends for example from an intake opening in the nacelle or canopy towards the generator) through one or more axial stator ducts to the drive end of the stator. In this way, the cooling airflow retains much of its effectiveness since it is prevented from coming into contact with warmer air that may be present in the stator interior cavity. A suitable manifold may connect the air intake channel to several such stator ducts.

The cooling airflow can enter the axial winding channels from one end of the stator, for example at the drive end, and can exit the axial winding channels at the other end. In other words, a cooling airflow can be contained in an axial winding channels over the length of the channel. However, as already explained above, the windings may not be optimally cooled towards the "exit" end of an axial winding channel, since the airflow will already have been warmed to some extent by the time it reaches the "exit" end. Therefore, in a preferred embodiment of the invention, the annular supporting structure of the stator comprises an arrangement of perforations, wherein a perforation is realised as an outflow opening of an axial winding channel of the cooling arrangement. This arrangement achieves a more favourably balanced cooling of the windings. The annular supporting structure of the stator must be able to bear the considerable weight of the windings without suffering from any distortion. Therefore, any arrangement of perforations is preferably realised to have at most a minimal effect on the structural stability of the annular supporting structure. For example, the perforations can be realised in a staggered arrangement, so that the "interruptions" are distributed in a relatively even manner over the annular surface of the supporting structure.

As described above, the major source of heat in a generator such as a wind turbine generator is the armature with its windings. If not effectively removed, this heat can be transferred to the magnets. Permanent magnets in particular are at risk of being damaged by excessive heat. The cooling arrangement according to the invention allows the heat to be transferred to a cooling airflow that passes directly over the surfaces of the windings. In a further preferred embodiment of the invention, the heat transfer from winding to air can be even further localised by enclosing the stator in an insulating layer such that the cooling airflow is contained within the stator. The insulating layer has the advantage of protecting the magnets from heat damage, and also has a further advantage of reducing the likelihood of foreign objects entering the air-gap. For example, a layer of insulation wrapped about the stator will prevent any dislodged spacer (from between a pair of windings) from entering the air-gap.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 is a schematic representation of a partial cross-section through a generator with a stator adapted for connection to a cooling arrangement according to the invention;
Fig. 2 is a schematic representation of a lengthwise cross-section through the generator of Fig. 1;
Fig. 4 is a schematic representation of a partial cross-section through a generator realised for connection to a second embodiment of the cooling arrangement according to the invention;

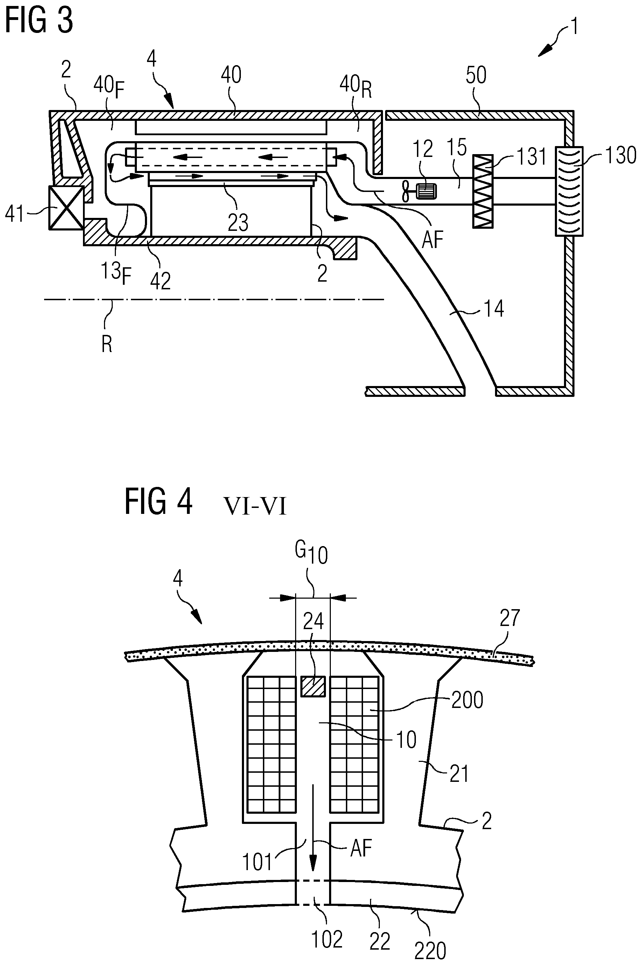

Fig. 4 is a schematic representation of a partial cross-section through a generator connected to the cooling arrangement of Fig. 3;

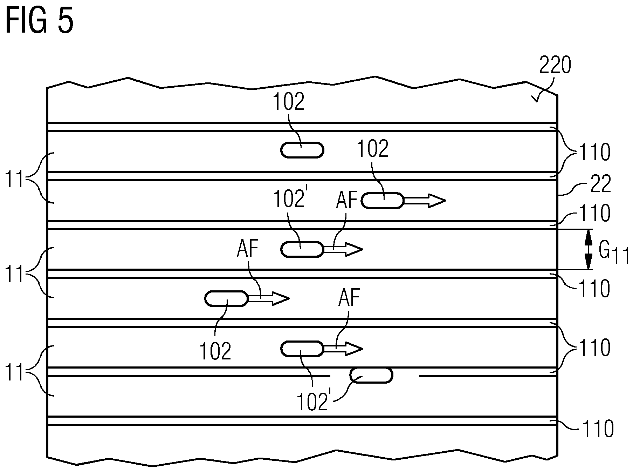

Fig. 5 is a schematic view of the interior surface of the stator of Fig. 5;

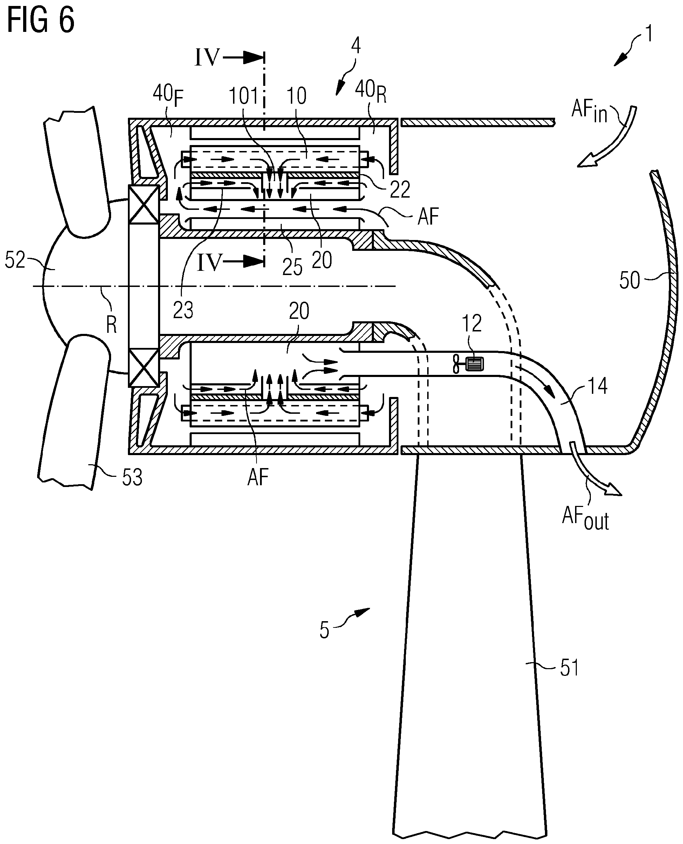

Fig. 6 is a schematic representation of a wind turbine with a second embodiment of the cooling arrangement according to the invention;

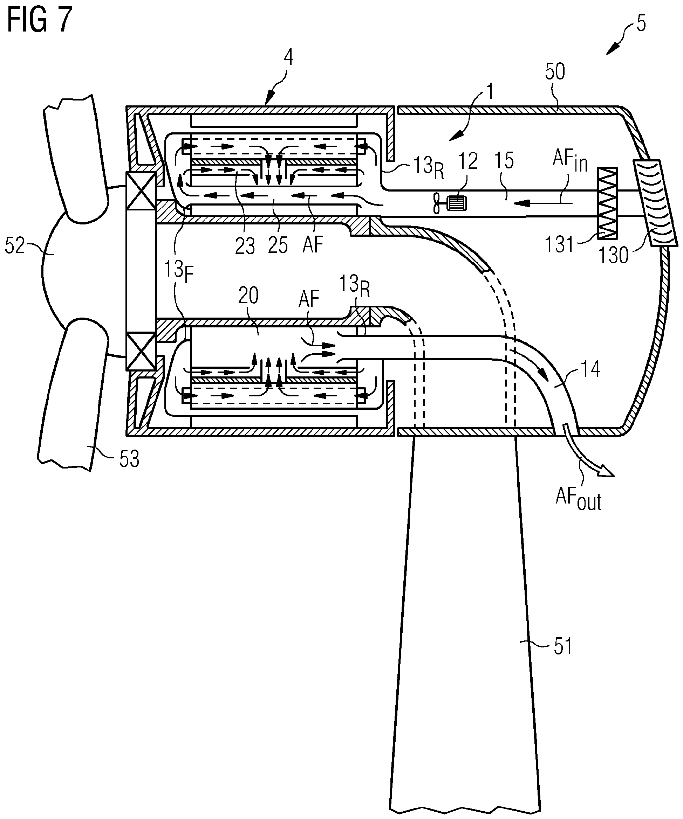

Fig. 7 is a schematic representation of a wind turbine with a third embodiment of the cooling arrangement according to the invention;

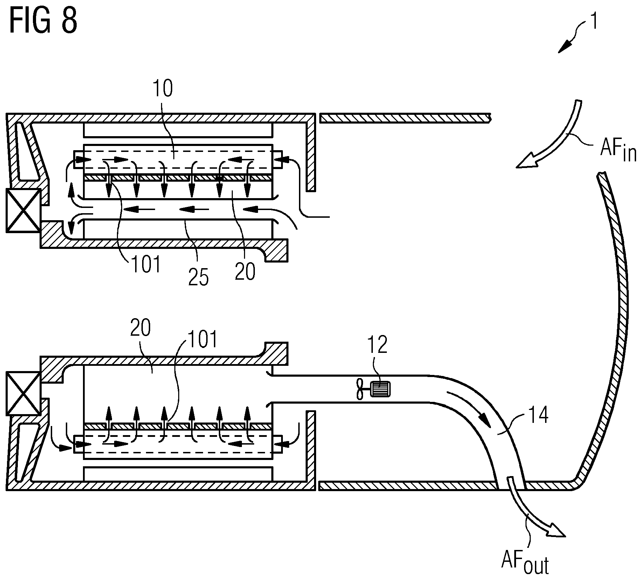

Fig. 8 is a schematic representation of a wind turbine with a fourth embodiment of the cooling arrangement according to the invention;

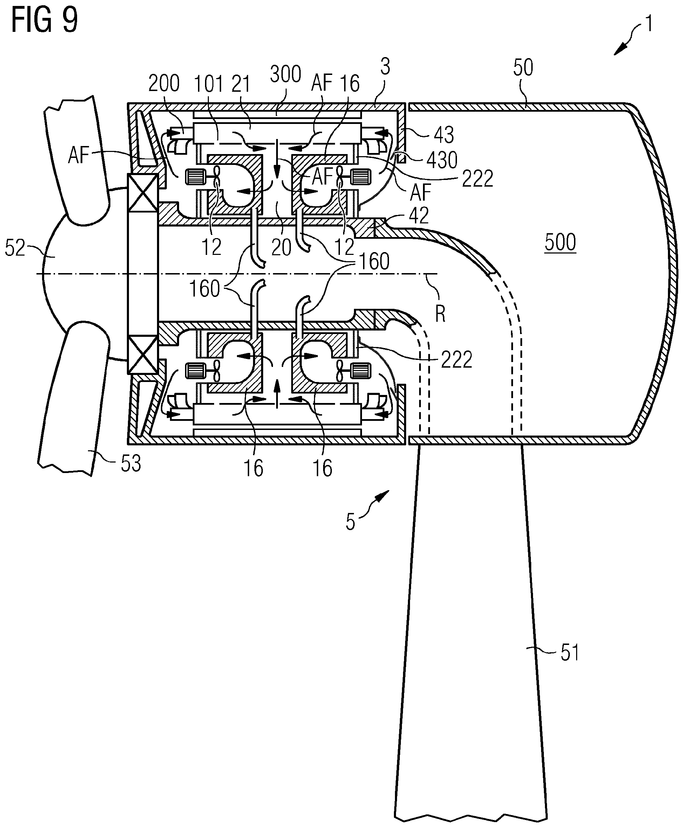

Fig. 9 is a schematic representation of a wind turbine with a fifth embodiment of the cooling arrangement according to the invention.

In the diagrams, like numbers refer to like objects throughout. Objects in the diagrams are not necessarily drawn to scale.

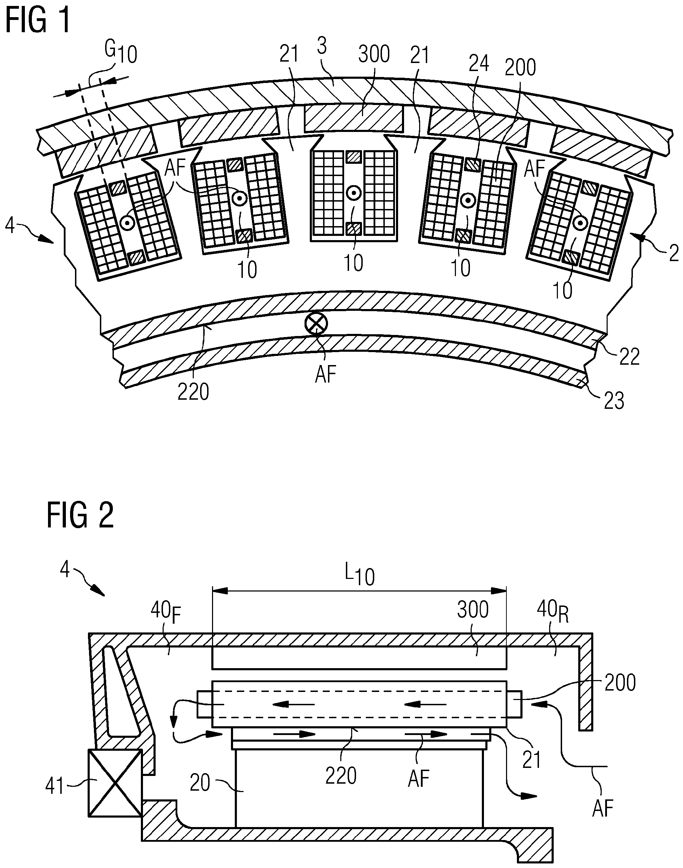

Fig. 1 is a schematic representation of a partial cross-section through a generator 4 with a stator 2 adapted for connection to a first embodiment of a cooling arrangement according to the invention. Here, the generator has an outer rotor 3 equipped with a plurality of magnets 300; and an inner stator 2 equipped with a plurality of stator teeth 21, between which the windings 200 are arranged in a pair-wise manner. In other words, a pair of windings 200 is arranged between adjacent stator teeth 21. The windings 200 of a pair are separated by a gap G₁₀, which can be about 3.0 - 10.0 mm wide. To ensure that the windings 200 do not become displaced, their position can be fixed by inserting one or more spacers 24 into the gap G₁₀ between the windings 200 of a pair. The gap G₁₀ essentially forms an axial winding channel 10, i.e. a channel 10 between the windings 200 of a pair, running in an axial direction, i.e. essentially parallel to the axis of rotation of the generator.

During operation of the generator, the windings 200 become very hot. The windings 200 of the stator 2 can be very effectively cooled by a cooling airflow AF that is guided into the axial winding channels 10. Heat from the windings 200 also spreads into the stator teeth 21 and the annular supporting structure 22 or yoke 22 of the stator 2. In this embodiment, a shroud 23 or lining 23 is used to also direct a cooling airflow AF along the inner surface 220 of the supporting structure 22. The diagram shows that the cooling airflow AF can travel in one direction along the axial winding channels 10 (as indicated using the arrow tip symbol coming out of the page) and back along the inner surface 220 of the supporting structure 22 (as indicated using the arrow fletching symbol going into the page).

Fig. 2 is a schematic representation of a lengthwise cross-section through the generator of Fig. 1. This diagram more clearly shows the paths that can be followed by the cooling airflow AF. Of course, the cooling airflow could travel in the opposite direction to that shown here, for example by first passing along the inner surface 220 of the stator supporting structure, and then returning along the axial winding channels 10. In either case, the cooling airflow enters an axial winding channel at one end of the stator 2, and travels along the entire length L₁₀ of the channel. An axial winding channel 10 in the stator 2 of a 3.0 MW direct-drive generator can be in the range of 0.5 - 2.0 m in length. Fig. 3 is a further schematic representation of elements of the cooling arrangement 1 according to the invention. The diagram indicates that the direct-drive generator 4 is mounted to a canopy or nacelle 50 of a wind turbine. The outer rotor 2 is realised as part of a housing 40 with a front end 40_{F} ("drive end") and a rear end 40_{R} ("non-drive end"). The rotatable housing 40 is mounted to a stationary main shaft 42 by means of a suitable bearing 41.

The cooling arrangement 1 comprises an air intake duct 15 connected to a filtration arrangement 131 and a mist eliminator 130, so that the cooling airflow is dried and filtered before passing into the generator 4. A fan 12 in the air intake duct 15 can "push" the cooling airflow AF actively into the axial winding channels of the stator 2. To ensure that the cooling airflow AF reaches the areas where it is most needed, the cooling arrangement 1 comprises a drive-end cover 13_{F} arranged in a cavity at the front end 40_{F} of the generator 4. The drive-end cover 13_{F} acts to ensure that the relatively cool air does not disperse in the front end cavity, and the cooling airflow AF is effectively forced to enter the return path along the inner surface of the stator supporting structure. This can be assisted by the shroud 23 of Fig. 1 above. After having taken up heat from the windings and the stator body, the warmed air passes into an exit duct 14 or exhaust duct 14 and is expelled from the nacelle 50.

Fig. 4 is a schematic representation of a partial cross-section through a generator 4 realised for connection to a second embodiment of the cooling arrangement according to the invention. Here, an axial winding channel 10 can connect to the interior of the stator 2 by means of an outflow passage 101 through a perforation 102 in the stator supporting structure 22. This makes it possible for the cooling airflow AF to follow various different paths, as will be explained below. In this embodiment, the stator 2 is shown to be encased or wrapped in an insulating layer 27, which ensures that the cooling airflow AF is confined to the spaces 10 between the windings 200, to increase its effectiveness.

Fig. 5 is a schematic view of the interior surface 220 of the stator of Fig. 5. The perforations 102 of the adjacent channels are arranged in a staggered or offset manner so that the structural stability of the supporting structure 22 is not compromised. The diagram also shows an arrangement of cooling fins 110 arranged in a parallel manner, so that a cooling fin 110 extends essentially parallel to the axis of rotation of the generator. Adjacent cooling fins 110 are separated by a gap G₁₁, and form an axial fin channel 11 to guide a cooling airflow AF in a certain direction as it passes along the inner surface 220 of the stator 2.

Fig. 6 is a schematic representation of a wind turbine 5 with a second embodiment of the cooling arrangement 1 according to the invention. Here also, only the relevant elements are shown, while a wind turbine tower 51, rotor hub 52 and rotor blades 53 are only indicated. The diagram shows an air intake AFᵢₙ, which can comprise filtered air at ambient temperature, passed into the generator 4 where it can enter the axial channels 10 from either end. This is made possible by guiding part of the cooling airflow AF through a number of stator ducts 25 from a non-drive end 40_{R} of the generator to the drive end 40_{F}. The stator 2 is realised so that there is no other possible way for the cooling airflow AF to reach the drive end of the stator 2. This embodiment therefore allows a more efficient cooling of the windings, since relatively cool air enters each axial winding channel 10 at both ends. The warmed air exits the channel 10 through an outflow passage 101 and through a corresponding perforation in the stator supporting structure 22, and can pass into the stator interior 20. From here, the warmed exhaust air is drawn out of the stator interior cavity 20 by an extractor fan 12 in an exhaust duct 14, which acts to expel the exhaust air AFₒᵤₜ to the exterior of the nacelle 51.

Fig. 7 is a schematic representation of a wind turbine 5 with a third embodiment of the cooling arrangement 1 according to the invention. This realisation is similar to that shown in Fig. 6 above, using stator ducts 25 to bring some cooling airflow AF to the drive end of the stator 2. In this embodiment, the cold air intake AFᵢₙ (already filtered and dried by a filtration unit 131 and a mist eliminator module 130) is pushed into the stator 2 by a fan 12. This embodiment further makes use of a drive end cover 13_{F} and a non-drive end cover 13_{R} to help the cooling airflow AF find a most direct path into the axial channels 10 at either end. The stator 2 is realised to ensure that the warmed air collected in the stator interior 20 can only pass out through an exhaust duct 14 so that the hot air AFₒᵤₜ can pass to the exterior of the nacelle 50.

Fig. 8 is a schematic representation of a wind turbine with a fourth embodiment of the cooling arrangement 1 according to the invention. This embodiment is similar to that described in Fig. 7 above, and shows a realisation in which each axial winding channel 10 is connected by several outflow passages 101 with the stator interior 20. To this end, the stator supporting structure comprises a corresponding number of perforations, which can be dimensioned and arranged to ensure that the stator's structural strength is not compromised.

Fig. 9 is a schematic representation of a wind turbine 5 with a fifth embodiment of the cooling arrangement 1 according to the invention. Here, the stator interior cavity 20 is effectively sealed off from the interior 500 of the nacelle 50 or canopy. The separation is effected by a labyrinth seal 430 between a brake disc 43 at the non-drive end of the generator and a stator rear face 222. Effectively, no air can pass between the stator interior cavity 20 and the nacelle interior 500, and no air can escape from the stator interior cavity 20 to the outside. A cooling airflow AF circulates within the stator 2. Heat exchangers 16 ensure that the heated air is cooled again, and the heat exchangers 16 can be connected in any suitable way (not shown in detail) to a further external heat exchanger. For example, an external heat exchanger (active or passive) can be mounted at the rear of the nacelle 50 and can be connected to the interior heat exchangers 16 using a suitable arrangement of ducts 160 or pipes 160. The pipes 160 can carry a cooling fluid such as air, water, or any other appropriate fluid. The heated air is drawn over the heat exchangers 16 and conveyed back towards the axial winding channels by the action of a number of fans 12 arranged inside the stator interior cavity 20. The diagram shows four fans 12, but any number of such fans 12 could be deployed, depending for example on the dimensions of the stator 2. This embodiment does not require any intake or exhaust ducts, and an initially clean and dry cooling airflow AF remains clean and dry during operation of the generator.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A cooling arrangement (1) realised to cool stator windings (200) of the stator (2) of a generator (4), which cooling arrangement (1) comprises
- a plurality of axial winding channels (10), wherein an axial winding channel (10) extends along a gap (G₁₀) between adjacent stator windings (200) in a direction essentially parallel to an axis of rotation (R) of the generator (4); and
- an airflow guiding means (12, 13F, 13R, 14, 15, 25) realised to guide a cooling airflow (AF) along the axial winding channels (10) and subsequently into an interior cavity (20) of the stator (2).

2. A cooling arrangement according to claim 1, wherein the cooling arrangement (1) is realised to direct the cooling airflow (AF) along essentially the entire length (L₁₀) of an axial winding channel (10).

3. A cooling arrangement according to claim 1 or claim 2, comprising at least one outflow passage (101) to connect an axial winding channel (10) with the interior cavity (20) of the stator (2).

4. A cooling arrangement according to any of the preceding claims, comprising at least one fan (12) for guiding the cooling airflow (AF).

5. A cooling arrangement according to any of the preceding claims, realised to convey the cooling airflow (AF) into an axial winding channel (10) at both ends (40_{F}, 40_{R}) of the axial winding channel (10).

6. A cooling arrangement according to any of the preceding claims, comprising an inner shroud (23) arranged in the interior cavity (20) of the stator (2) and realised to confine the cooling airflow (AF) along an inner surface (220) of the stator (2).

7. A cooling arrangement according to any of the preceding claims, comprising a plurality of axial fin channels (11) through which the cooling airflow (AF) is conveyed, wherein an axial fin channel (11) extends along a gap (G₁₁) between adjacent cooling fins (110) arranged on an inner surface (110) of the stator (1) in a direction essentially parallel to the axis of rotation (R) of the generator (4).

8. A cooling arrangement according to any of the preceding claims, comprising a drive-end cover (13_{F}) for covering a drive end of the stator (2) to direct the cooling airflow (AF) from the stator interior (20) into an axial winding path (10) and/or along an axial fin channel (11).

9. A wind turbine (5) comprising
- a direct-drive generator (4) with an outer rotor (3) realised to bear a magnet arrangement, and an inner stator (2) realised to bear a winding arrangement; and
- a cooling arrangement (1) according to any of claims 1 to 8 for cooling the windings (200) of the stator (2).

10. A wind turbine according to claim 9, comprising an exhaust duct (14) for conveying an exhaust airflow (AFₒᵤₜ) out of the stator (2) to the exterior of the wind turbine (5), and comprising a fan (12) arranged in the exhaust duct (14).

11. A wind turbine according to claim 9 or claim 10, wherein an annular supporting structure (22) of the stator (2) comprises an arrangement of perforations (102), wherein a perforation (102) is realised as an outflow opening (101) of an axial winding channel (10) of the cooling arrangement (1).

12. A wind turbine according to any of claims 9 to 11, wherein the stator (2) is enclosed in an insulating layer (27), which insulating layer (27) is realised to contain the cooling airflow (AF) essentially entirely within the stator (2).

13. A method of cooling the stator windings (200) of a generator (4), which method comprises the steps of
- providing a plurality of axial winding channels (10) such that an axial winding channel (10) extends along a gap (G₁₀) between adjacent stator windings (200) in a direction essentially parallel to an axis of rotation (R) of the generator (4); and
- guiding a cooling airflow (AF) along the plurality of axial winding channels (10) and subsequently into an interior cavity (20) of the stator (2).

## Patentansprüche

1. Kühlanordnung (1), die dafür ausgelegt ist, Statorwicklungen (200) des Stators (2) eines Generators (4) zu kühlen, wobei diese Kühlanordnung (1) umfasst:
- mehrere axiale Wicklungskanäle (10), wobei sich ein axialer Wicklungskanal (10) entlang eines Zwischenraums (G₁₀) zwischen benachbarten Statorwicklungen (200) in einer Richtung erstreckt, die im Wesentlichen parallel zu einer Drehachse (R) des Generators (4) ist; und
- ein Luftstrom-Führungsmittel (12, 13F, 13R, 14, 15, 25), das dafür ausgelegt ist, einen Kühlluftstrom (AF) entlang der axialen Wicklungskanäle (10) und anschließend in einen inneren Hohlraum (20) des Stators (2) hinein zu führen.

2. Kühlanordnung nach Anspruch 1, wobei die Kühlanordnung (1) dafür ausgelegt ist, den Kühlluftstrom (AF) entlang im Wesentlichen der gesamten Länge (L₁₀) eines axialen Wicklungskanals (10) zu leiten.

3. Kühlanordnung nach Anspruch 1 oder Anspruch 2, welche wenigstens einen Ausströmdurchlass (101) umfasst, um einen axialen Wicklungskanal (10) mit dem inneren Hohlraum (20) des Stators (2) zu verbinden.

4. Kühlanordnung nach einem der vorhergehenden Ansprüche, welche wenigstens einen Lüfter (12) zum Führen des Kühlluftstroms (AF) umfasst.

5. Kühlanordnung nach einem der vorhergehenden Ansprüche, welche dafür ausgelegt ist, den Kühlluftstrom (AF) in einen axialen Wicklungskanal (10) an beiden Enden (40_{F}, 40_{R}) des axialen Wicklungskanals (10) zu fördern.

6. Kühlanordnung nach einem der vorhergehenden Ansprüche, welche ein inneres Deckband (23) umfasst, das in dem inneren Hohlraum (20) des Stators (2) angeordnet ist und dafür ausgelegt ist, den Kühlluftstrom (AF) auf einen Bereich entlang einer Innenfläche (220) des Stators (2) einzuengen.

7. Kühlanordnung nach einem der vorhergehenden Ansprüche, welche mehrere axiale Rippenkanäle (11) umfasst, durch welche der Kühlluftstrom (AF) gefördert wird, wobei sich ein axialer Rippenkanal (11) entlang eines Zwischenraums (G₁₁) zwischen benachbarten Kühlrippen (110) erstreckt, die auf einer Innenfläche (110) des Stators (1) in einer Richtung angeordnet sind, die im Wesentlichen parallel zur Drehachse (R) des Generators (4) ist.

8. Kühlanordnung nach einem der vorhergehenden Ansprüche, welche eine Antriebsendabdeckung (13_{F}) zum Abdecken eines Antriebsendes des Stators (2) umfasst, um den Kühlluftstrom (AF) aus dem Statorinneren (20) in einen axialen Wicklungsweg (10) hinein und/oder entlang eines axialen Rippenkanals (11) zu leiten.

9. Windenergieanlage (5), welche umfasst:
- einen Direktantriebsgenerator (4) mit einem Außenrotor (3), der dafür ausgelegt ist, eine Magnetanordnung zu tragen, und einem Innenstator (2), der dafür ausgelegt ist, eine Wicklungsanordnung zu tragen; und
- eine Kühlanordnung (1) nach einem der Ansprüche 1 bis 8 zum Kühlen der Wicklungen (200) des Stators (2).

10. Windenergieanlage nach Anspruch 9, welche einen Abluftkanal (14) zum Fördern eines Abluftstroms (AFₒᵤₜ) aus dem Stator (2) hinaus zum Äußeren der Windenergieanlage (5) umfasst und einen Lüfter (12) umfasst, der in dem Abluftkanal (14) angeordnet ist.

11. Windenergieanlage nach Anspruch 9 oder Anspruch 10, wobei eine ringförmige Stützstruktur (22) des Stators (2) eine Anordnung von Durchbrechungen (102) umfasst, wobei eine Durchbrechung (102) als eine Ausströmöffnung (101) eines axialen Wicklungskanals (10) der Kühlanordnung (1) ausgebildet ist.

12. Windenergieanlage nach einem der Ansprüche 9 bis 11, wobei der Stator (2) von einer Isolierschicht (27) umschlossen ist, wobei diese Isolierschicht (27) dafür ausgelegt ist, den Kühlluftstrom (AF) im Wesentlichen vollständig innerhalb des Stators (2) zu halten.

13. Verfahren zum Kühlen der Statorwicklungen (200) eines Generators (4), wobei dieses Verfahren die folgenden Schritte umfasst:
- Bereitstellen mehrerer axialer Wicklungskanäle (10), sodass sich ein axialer Wicklungskanal (10) entlang eines Zwischenraums (G₁₀) zwischen benachbarten Statorwicklungen (200) in einer Richtung erstreckt, die im Wesentlichen parallel zu einer Drehachse (R) des Generators (4) ist; und
- Führen eines Kühlluftstroms (AF) entlang der mehreren axialen Wicklungskanäle (10) und anschließend in einen inneren Hohlraum (20) des Stators (2) hinein.

## Revendications

1. Un agencement de refroidissement (1) réalisé de façon à refroidir des enroulements de stator (200) du stator (2) d'un générateur (4), ledit agencement de refroidissement (1) comprenant
- une pluralité de canaux d'enroulement axiaux (10), un canal d'enroulement axial (10) s'étendant le long d'un espace (G₁₀) entre des enroulements de stator adjacents (200) dans une direction essentiellement parallèle à un axe de rotation (R) du générateur (4), et
- un moyen de guidage de flux d'air (12, 13F, 13R, 14, 15, 25) réalisé de façon à guider un flux d'air de refroidissement (AF) le long des canaux d'enroulement axiaux (10) et subséquemment vers une cavité intérieure (20) du stator (2).

2. Un agencement de refroidissement selon la revendication 1, dans lequel l'agencement de refroidissement (1) est réalisé de façon à diriger le flux d'air de refroidissement (AF) essentiellement le long de la totalité de la longueur (L₁₀) d'un canal d'enroulement axial (10).

3. Un agencement de refroidissement selon la revendication 1 ou 2, comprenant au moins un conduit d'écoulement (101) destiné au raccordement d'un canal d'enroulement axial (10) à la cavité intérieure (20) du stator (2).

4. Un agencement de refroidissement selon l'une quelconque des revendications précédentes, comprenant au moins un ventilateur (12) destiné au guidage du flux d'air de refroidissement (AF).

5. Un agencement de refroidissement selon l'une quelconque des revendications précédentes, réalisé de façon à acheminer le flux d'air de refroidissement (AF) vers un canal d'enroulement axial (10) aux deux extrémités (40_{F}, 40_{R}) du canal d'enroulement axial (10).

6. Un agencement de refroidissement selon l'une quelconque des revendications précédentes, comprenant une enveloppe interne (23) agencée dans la cavité intérieure (20) du stator (2) et réalisée de façon à confiner le flux d'air de refroidissement (AF) le long d'une surface intérieure (220) du stator (2).

7. Un agencement de refroidissement selon l'une quelconque des revendications précédentes, comprenant une pluralité de canaux d'ailette axiaux (11) au travers desquels le flux d'air de refroidissement (AF) est acheminé, un canal d'ailette axial (11) s'étendant le long d'un espace (G₁₁) entre des ailettes de refroidissement adjacentes (110) agencées sur une surface intérieure (110) du stator (1) dans une direction essentiellement parallèle à l'axe de rotation (R) du générateur (4).

8. Un agencement de refroidissement selon l'une quelconque des revendications précédentes, comprenant un couvercle de tête d'entraînement (13_{F}) destiné à recouvrir une tête d'entraînement du stator (2) de façon à diriger le flux d'air de refroidissement (AF) de l'intérieur du stator (20) vers un trajet d'enroulement axial (10) et/ou le long d'un canal d'ailette axial (11).

9. Une turbine éolienne (5) comprenant
- un générateur à entraînement direct (4) avec un rotor extérieur (3) réalisé de façon à porter un agencement d'aimants, et un stator intérieur (2) réalisé de façon à porter un agencement d'enroulements, et
- un agencement de refroidissement (1) selon l'une quelconque des revendications 1 à 8 destiné au refroidissement des enroulements (200) du stator (2).

10. Une turbine éolienne selon la revendication 9, comprenant un conduit d'échappement (14) destiné à l'acheminement d'un flux d'échappement (AFₕₒₜ) hors du stator (2) vers l'extérieur de la turbine éolienne (5), et comprenant un ventilateur (12) agencé dans le conduit d'échappement (14).

11. Une turbine éolienne selon la revendication 9 ou 10, dans laquelle une structure de support annulaire (22) du stator (2) comprend un agencement de perforations (102), dans lequel une perforation (102) est réalisée sous la forme d'une ouverture d'écoulement (101) d'un canal d'enroulement axial (10) de l'agencement de refroidissement (1).

12. Une turbine éolienne selon l'une quelconque des Revendications 9 à 11, dans laquelle le stator (2) est enveloppé dans une couche d'isolation (27), ladite couche d'isolation (27) étant réalisée de façon à contenir le flux d'air de refroidissement (AF) essentiellement entièrement à l'intérieur du stator (2).

13. Un procédé de refroidissement des enroulements de stator (200) d'un générateur (4), ledit procédé comprenant les étapes suivantes :
- la fourniture d'une pluralité de canaux d'enroulement axiaux (10) de sorte qu'un canal d'enroulement axial (10) s'étende le long d'un espace (G₁₀) entre des enroulements de stator adjacents (200) dans une direction essentiellement parallèle à un axe de rotation (R) du générateur (4), et
- le guidage d'un flux d'air de refroidissement (AF) le long de la pluralité de canaux d'enroulement axiaux (10) et subséquemment vers une cavité intérieure (20) du stator (2).
